# EUROPEAN PATENT APPLICATION

(11) **EP 1 132 843 A1**
(43) Date of publication of application: **12.09.2001**
(21) Application number: 01200900.7
(22) Date of filing: 09.03.2001
(51) Int. Cl.: G06F 17/60

(54) **System and method for providing products information via electronic communications**

(30) Priority: 09.03.2000 US 522225
(71) Applicant: Etera Corporation, Mount Vernon, Washington 98273 (US)
(72) Inventor: Loeb, Carl F., Mount Vernon, Washington 98273 (US)
(74) Representative: 't Jong, Bastiaan Jacobus

(57) **Abstract**

A network of websites includes a master website and a plurality of individual websites for a corresponding plurality of retailers. An enhancement component of each individual website is accessible through the master website and also through a base component of the individual website. The enhancement component expresses a store metaphor so that the website is attractive to customers and maximizes the ease of use by customers. The enhancement component includes information applicable to particular items available for purchase. This information may be generally applicable and provided by the owner of the master website. An individual retailer can alter the information, add to it, or completely replace it, as desired. This enables the tailoring of the information to the particular location of the retailer.

## Description

### Technical Field

This invention relates to systems and methods for presenting information to potential customers regarding products available for purchase and, more particularly, to systems and methods expressing a store metaphor and systems and methods for enhancing websites of individual retailers and/or bringing retailer websites together into a network.

### Background Information

Electronic commerce is growing at an unprecedented rate. Increasingly, consumers and potential customers are turning to electronic communications to obtain information about products and also to purchase products. The rapid and steady growth of electronic sales presents serious competition to traditional retailers operating conventional retail establishments that are visited and patronized by customers in person. In order to avoid significant loss of sales volume, many traditional retailers are joining the electronic competition by setting up their own websites to allow customers to purchase their wares either on line or through the traditional direct contact visit to physical retail establishments.

One problem that retailers face when entering the electronic arena is the relatively limited resources that can be devoted to creating and maintaining sophisticated websites sufficiently attractive to customers. In addition, individual retailers may have a local or regional focus, while electronic commerce is, by its nature, global in scope. In some industries, it is desirable to maintain at least a measure of localization and/or specialization in focus in order to maintain quality. For example, in the horticultural industry, adequate customer service in connection with the sale of plants and the provision of gardening advice can only be achieved through a focus that takes into account climate, soil, and other local factors. To date, traditional garden centers are largely maintaining their position and profitability because of their ability to provide products and service that are appropriate for the area in which they are located. However, in order to ensure that profitability is maintained in the future, it is desirable for local garden centers to have a presence in electronic commerce and to be able to meet customer needs electronically as well as in person.

Once a company, whether a traditional retailer or a retailer that relies solely on electronic commerce, decides to make sales electronically, it must create a website or websites which customers can access in order to purchase products. Because of the unprecedented rapid growth of electronic commerce and the rapidly increasing number of websites offering products for sale, any approach that can make a website stand out from its competition can greatly increase the chances for success of the website. This is especially true in regard to ease of use by customers.

At present, the proprietors of existing websites have failed to recognize the need for innovation and have simply followed the techniques used by previous electronic vendors. For example, virtually all existing websites are constructed using the techniques developed by the catalog industry to display products, supplemented by techniques for navigation that lend themselves to electronic rather than print media. This approach may be described as the use of the "catalog metaphor" and produces websites where each site page is loaded with information linking to other pages within the site. The resulting information density creates inherent confusion on the part of the first time visitor navigating the site on how to get from point A to point B within the site, unless a great many words are read, absorbed, and acted upon. In effect, the physical action of turning the page or looking up an index reference in a print catalog has been electronically replaced with pointing a mouse to a word or picture, clicking on the word or picture, and navigating to a target page by as many repetitions of point and click as are required. Thus, a first time visitor to a website, or a novice electronic commerce participant, is confronted by a navigation method within existing websites that is not intuitive since it has no concrete equivalent in the physical world with which the participant is familiar.

The object of the invention is to provide an improved approach to the construction of websites and to allow individual retailers to effectively participate and compete in the electronic commerce arena.

### Brief Summary of the Invention

The subject of the invention is a system and method for providing product information and conducting sales through electronic communication.

An important aspect of the invention is a system for selling items to customers accessing the system by computer. The system comprises a home page and a shop component. The home page includes graphics expressing a store metaphor. The graphics occupy a significant portion of the page and depict an entry area of a store with a signpost. The signpost displays components of the store including the shop component. The shop component is accessible by a customer via a link displayed on the home page. The shop component includes a department page further expressing the store metaphor and including graphics. The graphics occupy a significant portion of the page and depict an area of the store displaying a type of items for sale with a signpost displaying subtypes of the type of items. The department page includes a link from the department page to a subtype page displaying a plurality of items of the corresponding subtype.

As used herein, the term "signpost" means various structures that perform the function of a signpost as well as the usual signpost configuration shown in the drawings. For example, a group of balloons, each with a sign legend, may function as a signpost.

The aspect of the invention described above includes the important feature of a store metaphor. The store metaphor has the significant advantage of maximizing the user friendly character of the system. This character increases the ease of use of the system by consumers. It thereby increases the confidence and willingness to use the system of electronic commerce novices and also pleasantly surprises and encourages use by those more familiar with and practiced in electronic commerce.

The system preferably further comprises a plurality of links from the subtype page, one for each of the plurality of items. The links lead to information pages that display detailed information regarding the corresponding items. In preferred form, each information page includes graphics occupying a significant portion of the page and depicting an enlarged illustration of the corresponding item. A text field is adjacent to the graphics and provides detailed written information regarding the corresponding item. The system may also include the feature of tailoring information to localized conditions. This feature may be implemented in a system in which at least one of the subtypes is a category of plants. The system includes a request that the customer enter a geographical identifier. The detailed information, or more specifically the text field, corresponding to an item of the subtype can then include information tailored to growing conditions in the geographical area in which the customer is located.

Another aspect of the invention provides a method of electronically selling items to customers and providing a shopping experience simulating shopping in a physical store environment. The method comprises displaying a home page and including in the home page graphics expressing a store metaphor and depicting an entry area of a store. The graphics are sized to occupy a significant portion of the page. The home page also includes a signpost in connection with the graphics displaying components of the store including a shop component. There is displayed on the home page a link a customer can select to access the shop component. The shop component includes a department page further expressing the store metaphor. The department page includes graphics occupying a significant portion of the page and depicting an area of the store displaying a type of items for sale with a signpost displaying subtypes of the type of items. There is displayed on the department page a link a customer can select to access a subtype page displaying a plurality of items of the corresponding subtype.

The method may include use of information pages and provision of localized information, as discussed above.

Another aspect of the invention relates to a method for providing independent retailers with enhanced websites that include individualized information. The method comprises creating for each retailer a website having a base component and an enhancement component. The base component includes a link to the enhancement component. A home page is displayed within the enhancement component. The home page includes a plurality of links including a link a customer can select to access a shop component within the enhancement component. The shop component includes a display of a plurality of items and a plurality of links. There is one link for each item. The links are to information pages displaying detailed information regarding the corresponding items. According to the method, each information page initially includes information generally applicable to a group of retailers. The generally applicable information is structured to allow an individual retailer to change it by altering it, adding to it, or completely replacing it, as desired by the individual retailer.

The websites created for retailers may be created entirely anew. Alternatively, for a retailer already having a preexisting website, the base component of the website being created may incorporate elements of the preexisting website.

As described above, the links displayed on the home page include a link that may be chosen to access a shop component. The other links may provide access to various types of components. For example, one or more additional shop components may be provided with the different shop components being differentiated according to product type, price, or some other relevant criterion. Another example of a component that may be accessed via a home page link is an educational component. Such a component may provide the customer with background and other information that is relevant to products being sold on the website. It might also allow a customer to ask questions or share information relevant to the products.

The method may include establishing and maintaining a master website and establishing a network of websites including the master website and a plurality of websites created for individual retailers. Each retailer website is accessible to customers directly and also through the master website. Preferably, in the master website, customers are requested to provide a geographical identifier. Based on a geographical identifier provided by a customer, there is displayed a plurality of retailers for each of which a website has been created. A plurality of links is also displayed, one for the website created for each of the plurality of retailers.

A further aspect of the invention relates to a network of websites including a master website and a plurality of individual websites for a corresponding plurality of retailers. Each individual website is accessible to customers directly and also through the master website and includes a base component and an enhancement component. The base component includes a link to the enhancement component. The enhancement component includes a home page displaying a link to a shop component within the enhancement component. The shop component includes a display of a plurality of items and a plurality of links to information pages for the items. The information pages display detailed information regarding the corresponding items. Each information page initially includes information generally applicable to a group of retailers. The generally applicable information allows changes to it by an individual retailer, as described above.

The invention solves the problem discussed above of the difficulties individual retailers face in trying to participate and compete in electronic commerce. The invention provides an efficient and effective way for retailers to participate and enhance their businesses. By joining a network, the retailers benefit from the pooling of resources that enables the creation and use of sophisticated websites by individual retailers at a reasonable cost. The invention may also allow retailers to provide their customers with access to additional product lines that go beyond what can reasonably be provided within the physical store. In embodiments in which the network feature is combined with the store metaphor feature, the advantages of the invention are maximized. The customers of a retailer are given greater access to information and product lines but at the same time are still able to enjoy the familiarity of a shopping experience that effectively simulates shopping in a familiar physical store environment. They also may continue to benefit from the expertise of the retailer regarding local conditions.

### Brief Description of the Drawings

In the drawings, like element designations refer to like parts throughout, and:
Fig. 1 is an illustration of the home page of a master website structured in accordance with a preferred embodiment of the invention.
Fig. 2 is an illustration of a web browser display of the home page of the enhancement component of a website created for a retailer in accordance with the preferred embodiment.
Fig. 3 is like Fig. 2 and illustrates the shop component page linked to the home page shown in Fig. 2.
Fig. 4 is like Fig. 2 and illustrates a department page of the shop component.
Fig. 5 is similar to Fig. 2 and illustrates a subtype page of the department shown in Fig. 4.
Fig. 6 is like Fig. 2 and illustrates an information page linked to a subtype page.

### Detailed Description of the Invention

The invention was conceived as a means for promoting cooperation between a manufacturer or national distributor and local retail establishments to increase sales by both the manufacturer or distributor and the local retail establishments and to facilitate participation in the increased commerce by consumers while preserving for the consumers many of the advantages of traditional person-to-person contact with retailers. The manufacturer or distributor may be the manufacturer or distributor of various kinds of products. As used herein, the term "manufacturer" is broad enough to include growers of living horticultural products as well as manufacturers of nonliving products. It is anticipated that the advantages of the invention will best be realized by the horticultural industry. However, it is intended to be understood that the scope of the invention is not limited to this industry. An example of an application in a different industry is cooperation between a publisher and local retailers that specialize in books, guides and/or maps focused on specific geographical areas or specialized subjects.

An important aspect of the invention is a network of websites. It is presently anticipated that the network will be established by a manufacturer or national distributor although it could also be established by other parties, such as a group of retailers or a trade organization. The network of websites includes a master website and a plurality of individual websites for a corresponding plurality of retailers. The master website is typically established and maintained by the manufacturer or distributor as the or one of the company websites of the manufacturer or distributor.

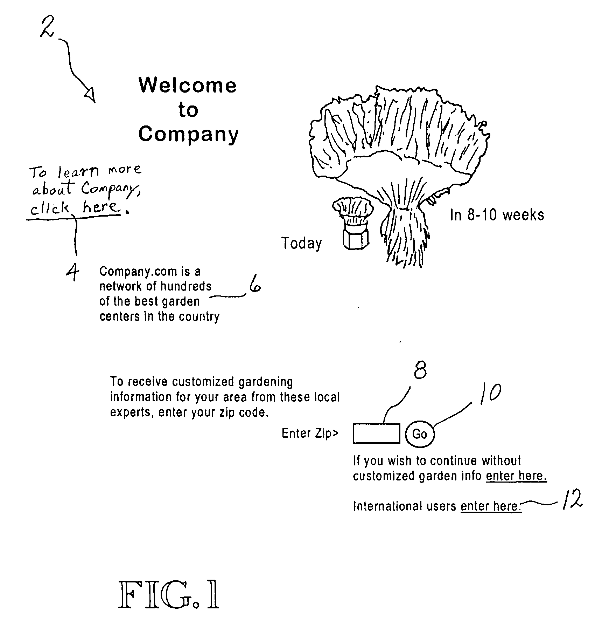

Fig. 1 is an illustration of the home page of the master website of a currently preferred embodiment of the invention. The area 2 in the upper left hand corner of the page refers to the company and includes a link 4 to further company information. Near the center of the page is a reference 6 to the network of retailers. At the lower portion of the page, there is text informing the website visitor that local customized gardening information can be obtained. In connection with the text is a box 8 in which the visitor can enter his zip code or other geographical identifier. Associated with the box is a link 10 the visitor may select to access the individual website for a retailer serving the zip code entered at 8.

As shown in Fig. 1, there is no selection of retailers for the visitor to choose from after entering the zip code and before clicking on the link 10. In a fully developed network, there preferably would be a short list, preferably about five, of retailers that would appear on the home page shown in Fig. 1 in response to entry of a zip code. The visitor would then click on a link for one of the retailers rather than on a generalized link, such as the link 10 illustrated. Alternatively, the list of retailers could be on a separate page that replaces the home page in response to the entry of a zip code.

Referring to Fig. 1, at the bottom of the figure, there is a link 12 for international users to select. This separate link is necessary since each country has its own system of zip codes or similar postal identifiers and, thus, must be handled separately in guiding international users to localized information.

In the illustrated preferred embodiment, the master website company is a grower and distributor of products relating to horticulture. The invention is particularly advantageous in connection with use by an industry like the horticultural industry. In the horticultural industry, high quality retailers are generally local individual retailers that are knowledgeable about local conditions and effectively recognize and meet local requirements. The local expertise and focus is particularly important since the success or failure of a given type of planting is highly dependent on local growing conditions. When an embodiment of the network of websites relates to horticulture, it is desirable that the user be informed of the growing zone that applies to his zip code or other geographical area. The United States Department of Agriculture has developed national standards for approximately eleven growing zones. Thus, following the entry of a zip code, an indication of the relevant zone would appear on the screen. This could be done separately from or along with the preferred list of local garden centers.

In the network, each individual website for a retailer includes a base component and an enhancement component. For a retailer that already has a preexisting website when it joins the network, the base component preferably incorporates at least some elements of the preexisting website. If the retailer has no preexisting website, the master website company may provide a standard base component individualized to specifically refer to the particular retailer. Whatever the origin of the base component, it preferably includes a link to the enhancement component. In the presently preferred arrangement, the individual website is accessible to customers directly and also through the master website, as described above. Preferably, the link from the master website and the link from the base component both bring the customer to what may be referred to as a home page of the enhancement component.

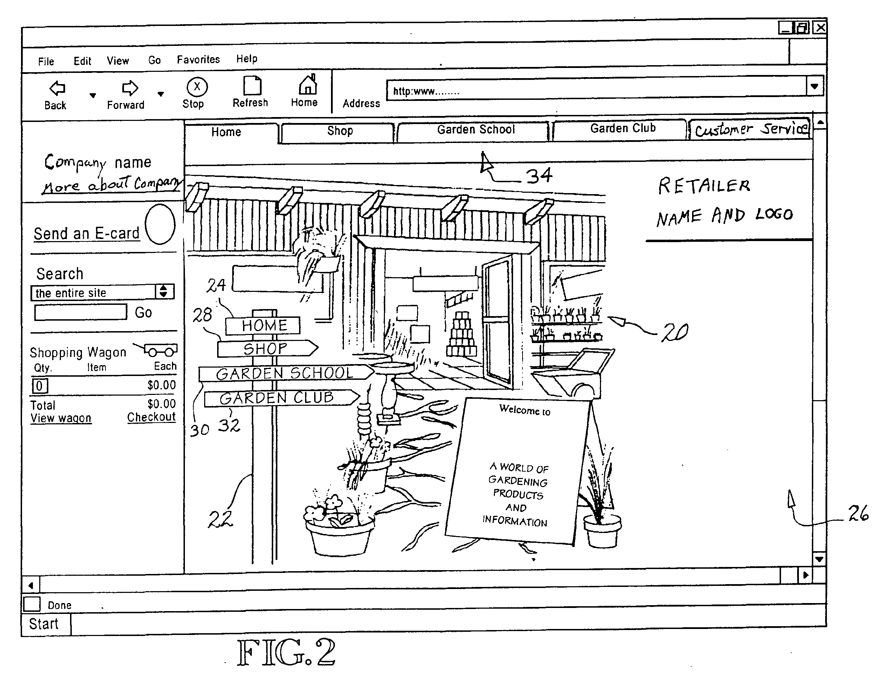

Fig. 2 illustrates the home page of the enhancement component of an individual website of the currently preferred embodiment referred to above. The home page includes graphics 20 that occupy a significant portion of the page. The term "significant portion" as used herein means a portion large enough for the graphics to be the visually dominant feature of the page. As shown in Fig. 2, the graphics 20 occupy approximately fifty percent of the page. In general, they preferably occupy at least one-third to one-half of the page. The graphics 20 express a store metaphor, which is an important feature of the invention. The graphics 20 in Fig. 2 depict an entry area of a store. Preferably, the graphics are tailored to individual retailers so that the entry area depicted for the store of a particular retailer is at least an approximate representation of an actual entry area of the physical store of the retailer. The graphics 20 on the home page and on other similarly structured pages of the website preferably are prepared in a manner that gives an appearance of depth and also maximizes the speed with which they can be transmitted through narrow band modem channels. A standard orthogonal projection is supplemented with a colorization scheme that emphasizes depth. Foreground portions are colored in full. Objects in mid ground are half colored, and objects in the background are shown in black and white.

Referring to Fig. 2, a signpost 22 is displayed in connection with the graphics 20. Preferably, the signpost is positioned at the front of the graphics 20. The top sign 24 on the signpost 22 is rectangular and refers to the page currently being visited. In Fig. 2, the top sign 24 includes the legend "HOME". There are a plurality of additional signs 28, 30, 32 on the signpost 22. Each of these additional signs has an arrow, rather than a strictly rectangular, configuration. The additional signs display components of the store. These components include a shop component indicated by the legend "SHOP" on the sign 28 beneath the home sign 24. Two additional components are referenced by the two lower signs 30, 32. Each of these additional components is an educational component of the system. The "GARDEN SCHOOL" on sign 30 may provide a range of localized gardening information, tips, and tutorials. The "GARDEN CLUB" referenced on the lower sign 32 may provide various interactive activities for the customer. Such educational components enable a retailer to provide a customer with more comprehensive gardening information. The additional components could also, or instead, include additional shop components differentiated from the illustrated shop component by the type of goods sold, price range, or some other criterion.

A text field 26 is located adjacent to the graphics 20. As illustrated, it is preferably located laterally adjacent to the graphics 20 on the right hand side of the screen. The text in the text field 26 may provide general information, and especially general information regarding the network and the various components. For example, the text may generally state that the "GARDEN SCHOOL" provides information and the "GARDEN CLUB" provides interactive activities. The home page also includes a plurality of links 34 to the components. As shown, the links 34 are located along the top of the screen in a conventional manner. They could also be implemented as part of the signs on the signpost 22. Preferably, a customer may click on either an upper link 34 or a sign on the signpost 22.

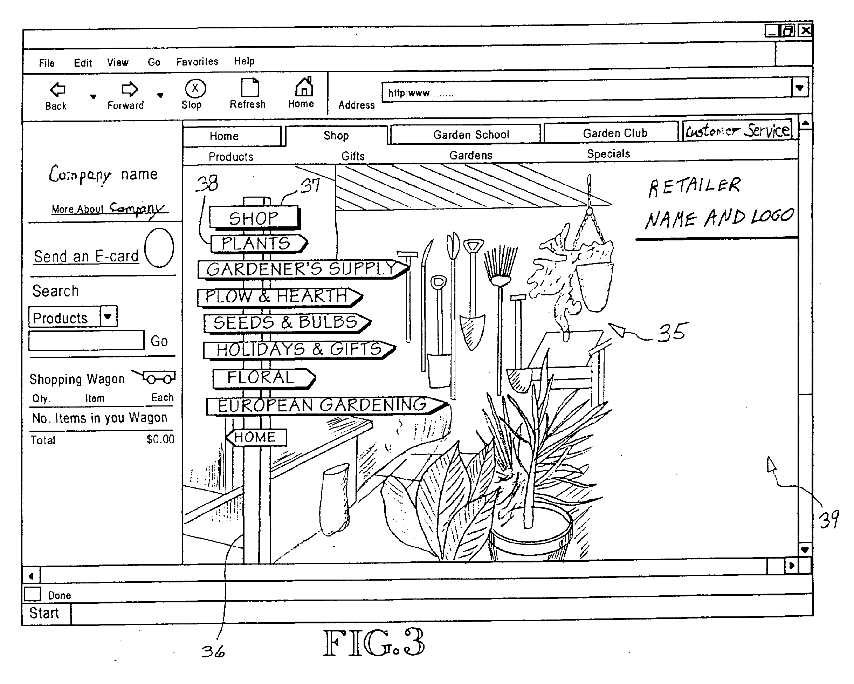

Fig. 3 illustrates the page of the shop component that appears on the screen in response to a customer clicking on a link to the shop component on the home page shown in Fig. 2. The page illustrated in Fig. 3 further expresses the store metaphor and includes graphics 35 occupying a significant portion of the page, as described above. The graphics 35 generally illustrate the products that are available in the various departments of the shop component. A signpost 36 is positioned at the front of the graphics 35 and includes an upper rectangular sign 37 with the legend "SHOP" to indicate the component the customer is currently visiting. It also includes a plurality of signs displaying departments of the shop component including a department 38 offering plants for sale. At the right hand portion of the screen is a text field 39 that preferably provides information regarding these various departments. A customer may move from the page illustrated in Fig. 3 to the department page of a particular department by clicking on a suitable link displayed on the Fig. 3 page. On the illustrated page, the links are the signs, e.g. sign 38, on the signpost 36.

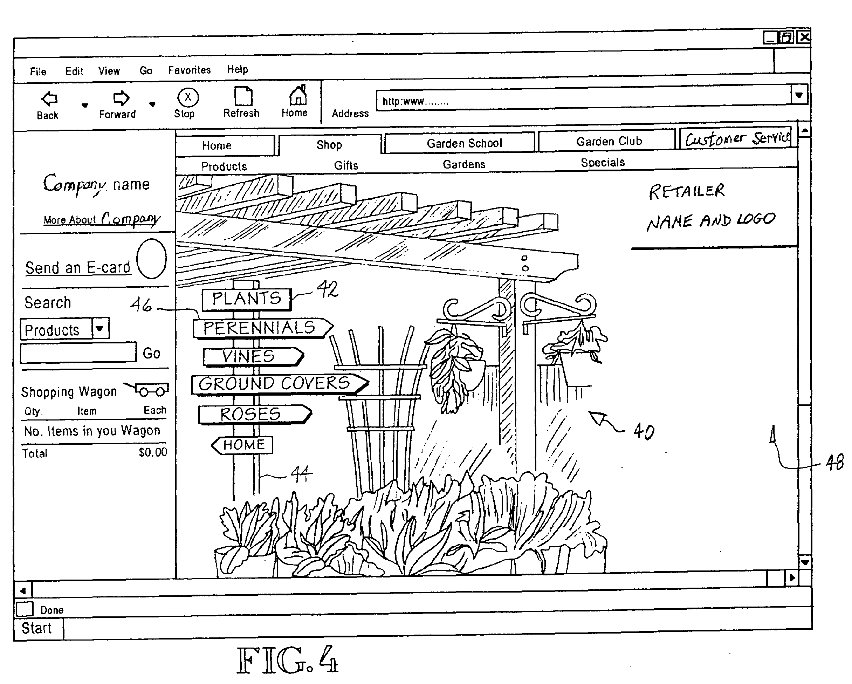

Fig. 4 illustrates a department page within the shop component. The department page further expresses the store metaphor and includes graphics 40 occupying a significant portion of the page, as described above. On the department page, the graphics 40 depict an area of the store at which a type of items for sale are displayed. In the case of the department page shown in Fig. 4, the type of items is plants, as indicated by the top sign 42 on the signpost 44 positioned in the foreground portion of the graphics 40. The additional arrow configuration signs display subtypes of the type of items expressed in the graphics 40. In the illustrated example, these subtypes are particular kinds of plants, namely perennials, vines, ground covers, and roses. The department page includes a link 46 from the department page to a subtype page for each of the subtypes displayed on the signpost 44. As on the home page shown in Fig. 2, the department page shown in Fig. 4 has a text field 48 at the right of the screen. This text field may display various information regarding the plants available for purchase on the individual website.

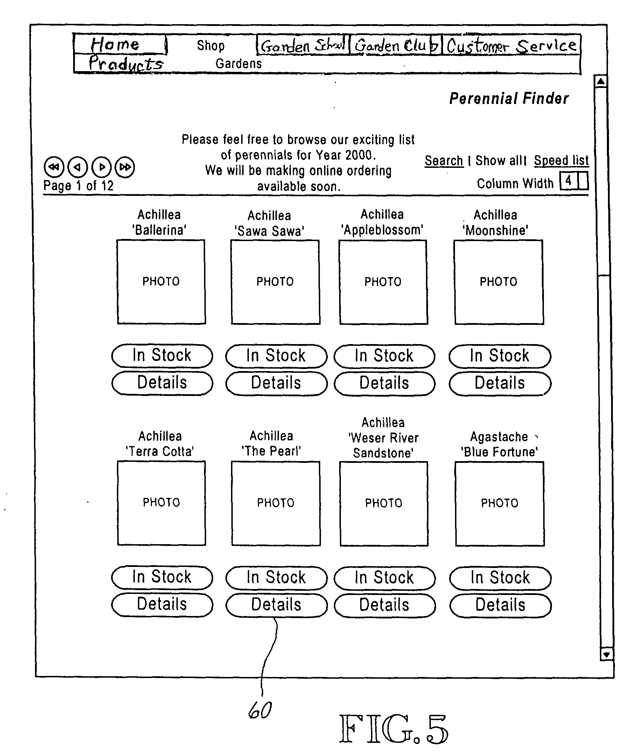

The department page preferably displays a link 46 that leads directly or through an additional page or pages to a subtype page displaying a plurality of items of the corresponding subtype. Fig. 5 is an illustration of one screen of a subtype page showing a plurality of perennials. As shown, the page screen shows eight different perennials at a time. The number of perennials displayed may vary considerably, to be eight, less than eight, or significantly more than eight. For each item displayed, there is also displayed a link 60 to an information page displaying detailed information regarding the corresponding item. On the example subtype page shown in Fig. 5, the link 60 is labeled "details". A user/customer can click on a selected link 60 to access detailed information regarding a particular perennial the customer is interested in.

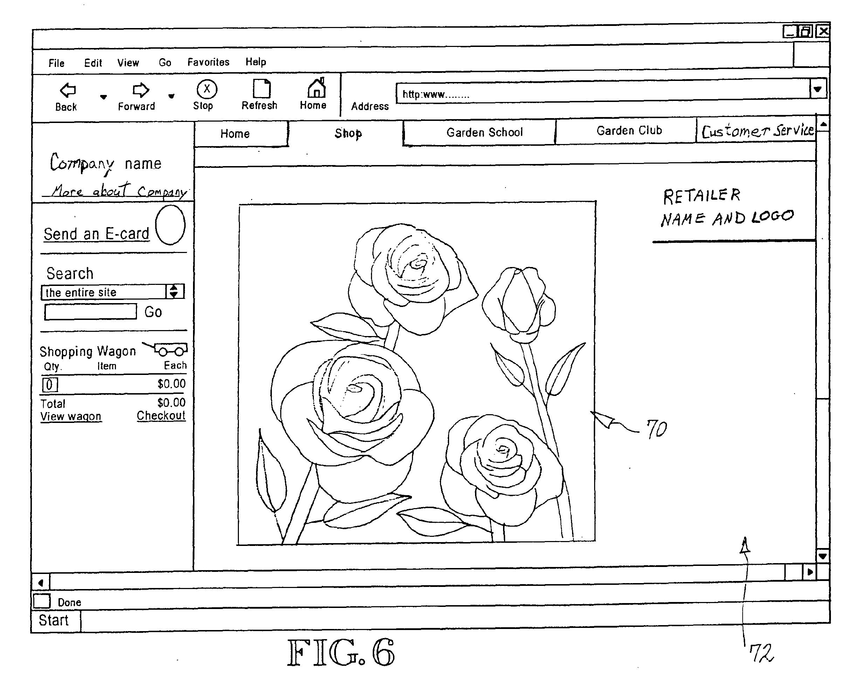

Fig. 6 is an illustration of an information page that may be accessed through a subtype page, such as the one illustrated in Fig. 5. The information page shown in Fig. 6 displays a particular rose item or product, rather than one of the perennials shown in Fig. 5. However, its structure is the same as the structure of a perennial information page. As in the case of the home page, component page, department page, and subtype page shown in Figs. 2-5, the information page further expresses the store metaphor. Referring to Fig. 6, the information page includes graphics 70 occupying a significant portion of the page and depicting an enlarged illustration of the corresponding item. A text field 72 is positioned adjacent to the graphics 70. The text field includes detailed written information regarding the illustrated item. The graphics 70 provide the customer with a detailed visual representation of the actual appearance of the item.

To enhance customer service and assist customers in buying only items that are appropriate to their needs, the text in the text field 72 is preferably adapted to local conditions. At present, it is anticipated that the network will be developed by the owner of the master website who will initially provide text for the text field 72. This initial text will be information generally applicable to a group of retailers. The generally applicable information will be structured by the master website owner to allow an individual retailer to change the generally applicable information by altering it, adding to it, or completely replacing it, as desired by the individual retailer. Any changes to the information by the individual retailer would generally be aimed at tailoring the information to growing conditions in the geographical area in which the customer and/or retailer is located.

There are obviously great differences between environmental and thus growing conditions in widely separated geographical areas, such as Amarillo, Texas and Bangor, Maine. It is frequently not appreciated that there can also be significant differences between growing conditions in areas that are quite close to one another. For example, in Washington state, locations that are within only ten or so miles of each other can have quite different local conditions that require quite different garden practices. This is illustrated in the table set forth below.

| City | Rainfall | Soil Ph | Special conditions Zip |
|---|---|---|---|
| Anacortes | 15" | 6.5 | Salt spray, sunny 98221 |
| Mount Vernon | 30" | 5.5 | Widely varying soil 98273 types |
| Sedro Woolley | 50" | 5.0 | Much colder than 98282 Mount Vernon |

Garden centers in each of the three cities listed above can modify their advice relating to, for example, rhododendrons to help ensure success in growing of this type of plant in their particular localities. For example, a garden center in Anacortes may recommend acidifying the soil before planting rhododendrons, while a garden center in Mount Vernon may advise that no such acidification is necessary but that rhododendrons planted in the clay soils on the surrounding hills will need drainage modification. A garden center in Sedro Woolley may advise customers not to plant certain rhododendrons that would not be hearty enough due to the harsher winters there. The appropriateness of the localized information is assured since the visiting customer has directly accessed the garden center or has accessed it through the master website by entering his zip code.

When the geographically generally applicable information provided by the master website owner is appropriate to the location of a garden center, the center may choose to display the generally applicable information without alteration. If the generally application information is relevant but additional information or tips are required to help assure success of a planting, the garden center may choose to modify or add to the information. Alternatively, the center may choose to entirely replace the generally applicable information with its own unique information.

An example of these alternatives relates to the display of a hydrangea in the graphics portion 70 of an information page. The generally applicable information may inform consumers that: "Hydrangeas are vigorous and easy to grow. They can be pruned to maintain a desired size and will do well in the shade. Flowers are pink in alkaline soils and blue in acid soils." For an area with acidic soil, the generally applicable information may be varied by substituting for the last sentence a sentence stating that: "To turn the pink flowers of your hydrangea to blue, add ammonium sulphate around the base of the plant." For a location in which the soil is alkaline, the last statement may read: "To turn the blue flowers of your hydrangea to pink, add dolomite limestone flour around the base of the plant." For locations that are not favorable to the successful growth of hydrangeas, the entire content of the generally application information may be replaced by a statement such as: "A beautiful and common plant in many parts of the United States, hydrangeas unfortunately will not survive our harsh winters and are not recommended."

As noted above, the store metaphor is an important feature of the invention. However, it is currently anticipated that at some point the individual website will revert to the more conventional catalog metaphor so that customers can order selected items. The point at which a customer places orders is within the discretion of the customer, but the order placement is preferably deferred until the customer has viewed the information page of the item to be ordered. On the left hand portion of Figs. 2-6, a conventional shopping wagon element of the catalog metaphor is displayed. In order to order, a customer simply clicks on this area of a screen and places an order in a conventional manner. Within the overall context of the website, even the ordering procedure can be analogized to the walking over to a cashier and paying stage of an in-store experience.

The store metaphor feature of the invention is important since it maximizes the user friendly character of the enhancement component of the individual website of a retailer. In the illustrated embodiment, a visit to the website mimics a visit to a "brick and mortar" garden center. Initially, an entry area of the center is encountered, as illustrated in Fig. 2. The visitor is informed of the shopping and informational aspects of the center, as illustrated in Fig. 3, and is guided by a sign 24 to a particular department of the center, as illustrated in Fig. 4. Additional signs lead to displays of groups of items of a particular type or subtype, as illustrated in Fig. 5. Then, the visitor focuses on a particular item, as illustrated in Fig. 6. The detailed information 72 encountered at this point simulates signs in a store and/or communication with store personnel.

The user friendliness eases any uncertainty felt by customers who are novices in electronic commerce. It also encourages use of the website by more computer savvy customers by making the experience of visiting the website noticeably more satisfying than visits to conventionally structured websites. For both sophisticated and novice customers, navigation through the website is smooth and easy to accomplish without undue effort or searching for needed information. The needed information is easily accessible through an intuitive procedure easily grasped and followed by the customer. In the end, the purchase of products suitable to the customer can be accomplished efficiently without the expenditure of large amounts of time and with the minimization of any likelihood of mistakes in ordering unsuitable items.

The store metaphor feature also facilitates introduction of novice customers to a store's website. Brochures or "site maps" may be prepared and distributed for this purpose. A site map may mimic the structure of the website and include short explanations of the content of various departments. A busy store employee can use a site map to introduce the website to a customer in a friendly manner that encourages use of the website by the customer. The investment of only a minimal amount of the employee's time produces a highly positive result.

Overall, the use of the website can increase the volume of a retailer's business by generating on-line sales as well as nurturing the relationship between customers and the retailer to maintain in-store sales. The website enables the retailer to offer products that cannot be made available in store because of space limitations and/or the need for special handling. The master website proprietor can maximize this advantage by enlisting third party suppliers to participate and allow their products to be offered on the retailer's website. The retailer benefits from an enlarged product line and increased sales volume. The third parties benefit by reaching customers they might not otherwise reach. Preferably, the website is branded throughout as the website of the retailer to help maximize its value in enhancing the prestige of the retailer. It may also be co-branded with the name or names of the suppliers, as indicated in the lower left portions of Figs. 2-4 and 6, to emphasize the well-known stature of the products and increase the benefit to the suppliers, whether they are a master website company or third parties.

Throughout the description of the illustrated preferred embodiment and the claims, there are references to links from one page to another. It is within the scope of the invention for there to be intermediate pages between the described link and the destination page. However, it is generally preferable that the link be a direct link between the two pages so that the flow of the store metaphor will not be interrupted. In situations in which an intermediate link or links are desired and/or provide additional needed information, the intermediate page or pages preferably also express the store metaphor. The description and claims also include references to a "plurality of links". This term includes a single area to click on by a user who enters information regarding the link destination, as well as a plurality of click areas predesignated for specified destinations.

Although the preferred embodiment of the invention has been illustrated and described herein, it is intended to be understood by those skilled in the art that various modifications and omissions in form and detail may be made without departing from the spirit and scope of the invention as defined by the following claims.

## Claims

1. A system for selling items to customers accessing the system by computer:
a home page including graphics expressing a store metaphor, said graphics occupying a significant portion of the page and depicting an entry area of a store with a signpost displaying components of the store including a shop component; and
a shop component of the system accessible by a customer via a link displayed on the home page; said shop component including a department page further expressing the store metaphor and including graphics occupying a significant portion of the page and depicting an area of the store displaying a type of items for sale with a signpost displaying subtypes of said type of items, and a link from said department page to a subtype page displaying a plurality of items of the corresponding subtype.

2. The system of claim 1, further comprising a plurality of links from said subtype page, one for each of said plurality of items, to an information page displaying detailed information regarding the corresponding item.

3. The system of claim 2, wherein each said information page includes graphics occupying a significant portion of the page and depicting an enlarged illustration of the corresponding item, and a text field adjacent to said graphics providing detailed written information regarding the corresponding item.

4. The system of claim 3, wherein the system includes a request that the customer enter a geographical identifier, at least one of said subtypes is a category of plants, and said text field corresponding to at least one item of said one of said subtypes includes information tailored to growing conditions in the geographical area in which the customer is located.

5. The system of claim 2, wherein the system includes a request that the customer enter a geographical identifier, at least one of said subtypes is a category of plants, and said detailed information corresponding to at least one item of said one of said subtypes includes information tailored to growing conditions in the geographical area in which the customer is located.

6. A method of electronically selling items to customers and providing a shopping experience simulating shopping in a physical store environment, comprising:
displaying a home page and including in said home page graphics expressing a store metaphor and depicting an entry area of a store, sizing said graphics to occupy a significant portion of the page, and also including a signpost in connection with said graphics displaying components of the store including a shop component;
displaying on said home page a link a customer can select to access the shop component; and
including in said shop component a department page further expressing the store metaphor and including graphics occupying a significant portion of the page and depicting an area of the store displaying a type of items for sale with a signpost displaying subtypes of said type of items; and
displaying on said department page a link a customer can select to access a subtype page displaying a plurality of items of the corresponding subtype.

7. The method of claim 6, further comprising displaying on said subtype page a plurality of links, one for each of said plurality of items, to an information page; and displaying on said information page detailed information regarding the corresponding item.

8. The method of claim 7, wherein displaying said detailed information includes displaying graphics occupying a significant portion of the page and depicting an enlarged illustration of the corresponding item, and a text field adjacent to said graphics providing detailed written information regarding the corresponding item.

9. The method of claim 8, comprising requesting that the customer enter a geographical identifier, including in said subtypes at least one subtype that is a category of plants, and tailoring said text field for one or more items of said at least one subtype to growing conditions in the geographical area in which the customer is located.

10. The method of claim 7, comprising requesting that the customer enter a geographical identifier, including in said subtypes at least one subtype that is a category of plants, and tailoring said detailed information for one or more items of said at least one subtype to growing conditions in the geographical area in which the customer is located.

11. A method for providing independent retailers with enhanced websites that include individualized information, comprising:
creating for each retailer a website having a base component and an enhancement component, said base component including a link to said enhancement component;
displaying within said enhancement component a home page including a plurality of links including a link a customer can select to access a shop component within said enhancement component;
including in said shop component a display of a plurality of items and a plurality of links, one for each item, to an information page displaying detailed information regarding the corresponding item; and
initially including in each said information page information generally applicable to a group of retailers, said generally applicable information being structured to allow an individual retailer to change said generally applicable information by altering it, adding to it, or completely replacing it, as desired by the individual retailer.

12. The method of claim 11, wherein creating said website comprises incorporating into said base component elements of a preexisting website of the retailer.

13. The method of claim 12, wherein said links displayed on said home page also include a link to an educational component.

14. The method of claim 11, wherein said links displayed on said home page also include a link to an educational component.

15. The method of claim 11, wherein said plurality of items belong to a category of plants, and said generally applicable information is geographically generally applicable.

16. The method of claim 12, wherein said plurality of items belong to a category of plants, and said generally applicable information is geographically generally applicable.

17. The method of claim 11, comprising establishing and maintaining a master website, and establishing a network of websites including said master website and a plurality of websites created for individual retailers, each website created for a retailer being accessible to customers directly and also through said master website.

18. The method of claim 17, comprising, in said master website:
requesting customers to provide a geographical identifier; based on a geographical identifier provided by a customer, displaying a plurality of retailers for each of which a website has been created; and displaying a plurality of links, one for the website created for each of said plurality of retailers.

19. The method of claim 18, wherein in said website created for each of said plurality of retailers, said plurality of items belong to a category of plants, and said generally applicable information is geographically generally applicable.

20. A network of websites including a master website, and a plurality of individual websites for a corresponding plurality of retailers; each individual website being accessible to customers directly and also through said master website and including a base component and an enhancement component, said base component including a link to said enhancement component;
each said enhancement component including a home page displaying a plurality of links including a link a customer can select to access a shop component within said enhancement component, said shop component including a display of a plurality of items and a plurality of links, one for each item, to an information page displaying detailed information regarding the corresponding item; and each said information page initially including information generally applicable to a group of retailers, said generally applicable information being structured to allow an individual retailer to change said generally applicable information by altering it, adding to it, or completely replacing it, as desired by the individual retailer.

21. The network of claim 20, wherein the base component of at least one of said individual websites has incorporated therein elements of a preexisting website of the corresponding retailer.

22. The network of claim 21, wherein said links displayed on said home page also include a link to an educational component.

23. The network of claim 20, wherein said links displayed on said home page also include a link to an educational component.

24. The network of claim 20, wherein said plurality of items belong to a category of plants, and said generally applicable information is geographically generally applicable.

25. The network of claim 21, wherein said plurality of items belong to a category of plants, and said generally applicable information is geographically generally applicable.

26. The network of claim 20, comprising, in said master website, a display of a request that customers provide a geographical identifier and a display of links to a plurality of retailers selected in response to entry of a geographical identifier by a customer.

27. The network of claim 24, comprising, in said master website, a display of a request that customers provide a geographical identifier and a display of links to a plurality of retailers selected in response to entry of a geographical identifier by a customer.
